# EUROPEAN PATENT APPLICATION

(11) **EP 4 461 980 A1**
(43) Date of publication of application: **13.11.2024**
(21) Application number: 22918782.8
(22) Date of filing: 14.12.2022
(51) Int. Cl.: F16C 19/18, F16C 33/38, F16C 33/66, B60B 35/02, B60B 35/14

(54) **ANGULAR BALL BEARING CAGE AND ANGULAR BALL BEARING**

(30) Priority: 07.01.2022 JP 2022001834
(71) Applicant: NSK Ltd., Tokyo 141-8560 (JP)
(72) Inventor: FUKUHARA Yuki, Fujisawa-shi, Kanagawa 251-8501 (JP)
(74) Representative: Müller-Boré & Partner Patentanwälte PartG mbB
(86) International application number: PCT/JP2022/046078
(87) International publication number: WO 2023/132196

(57) **Abstract**

[Problem] To achieve a structure of an angular ball bearing cage capable of reducing stirring resistance or friction generated between the cage and solidified grease.

[Solution] Each of a plurality of column portions includes a first branch portion and a second branch portion that are provided, in an end portion on one side in the axial direction, to extend in the circumferential direction in a form of a bifurcation; and a grease storage groove formed in a portion therebetween. The tip-end portion of the first branch portion of one column portion and the tip-end portion of the second branch portion of a column portion adjacent to the one column portion extend in directions approaching each other in the circumferential direction and are connected to each other in the circumferential direction. The tip-end portion of the second branch portion of the one column portion and the tip-end portion of the first branch portion of a column portion adjacent to the one column portion extend in directions approaching each other in the circumferential direction and are connected to each other in the circumferential direction.

## Description

### TECHNICAL FIELD

The present disclosure relates to an angular ball bearing cage and an angular ball bearing including the angular ball bearing cage.

### BACKGROUND ART

Double-row angular ball bearings are used as hub unit bearings for rotatably supporting wheels of automobiles with respect to a suspension device. In double-row angular ball bearings used as hub unit bearings, long life and high rigidity may be achieved by ensuring a long distance between the balls arranged in double rows (hereinafter referred to as "distance between ball rows").

In double-row angular ball bearings, a plurality of balls are arranged at equal intervals in the circumferential direction using an angular ball bearing cage for each row, and each ball is rollingly held. Known examples of angular ball bearing cages include tilted-type angular ball bearing cages as described in JP 2018-059546 A, and crown-type angular ball bearing cages as described in JP 2020-133741 A.

A tilted-type angular ball bearing cage has an approximately truncated conical shape as a whole, and includes a small-diameter annular rim portion and a large-diameter annular rim portion, a plurality of column portions that connect the small-diameter rim portion and the large-diameter rim portion, and a plurality of pockets surrounded on all sides by the small-diameter rim portion, the large-diameter rim portion, and a pair of column portions adjacent in the circumferential direction.

On the other hand, a crown-type angular ball bearing cage has an approximately truncated conical shape as a whole, and includes an annular rim portion, a plurality of column portions each extending in the axial direction from a plurality of locations in the circumferential direction of the rim portion, and a plurality of pockets surrounded on three sides by the rim portion and a pair of column portions adjacent in the circumferential direction.

### CITATION LIST

### PATENT LITERATURE

Patent Literature 1: JP 2018-059546 A
Patent Literature 2: JP 2020-133741 A

### SUMMARY OF INVENTION

### TECHNICAL PROBLEM

The crown-type angular ball bearing cage does not have the large-diameter rim portion that is provided in the tilted-type angular ball bearing cage, and thus balls can be arranged near a sealing device that closes an opening portion of the internal space of the angular contact ball bearing, which is advantageous in increasing the distance between the rows of balls. However, in a double-row angular ball bearing that incorporates a crown-type angular ball bearing cage, in a case where the distance between ball rows is increased, the end portions of the balls and column portions will alternately pass close to the sealing device during use.

Grease is sealed in the internal space of the double-row angular contact ball bearing in order to lubricate the rolling contact sections. During use of the angular contact ball bearing, grease moves outward in the radial direction in the internal space under the influence of centrifugal force and tends to collect in a space behind the sealing device.

Therefore, in a double-row angular ball bearing that incorporates a crown-type angular ball bearing cage, during use, the end portions of the balls and column portions stir the grease that has collected in the space behind the sealing device. In other words, when a crown-type angular ball bearing cage is used, each end portion of the balls and column portions becomes a stirring portion. Therefore, the stirring portion has large unevenness in the axial direction, and the stirring resistance (dynamic torque) tends to increase.

On the other hand, in a case where a tilted-type angular ball bearing cage is used, during use, the annular large-diameter rim portion stirs the grease that has gathered in the space behind the sealing device. That is, in a case where a tilted-type angular ball bearing cage is used, the annular large-diameter rim portion becomes the stirring portion. Therefore, compared to the case where a crown-type angular ball bearing cage is used, the unevenness in the axial direction of the large-diameter rim portion serving as the stirring portion is reduced, and thus the stirring resistance can be kept small. However, the grease that collects in the space behind the sealing device is not stirred and tends to solidify, leading to a new problem such as increased friction between the solidified grease and the large-diameter rim portion.

An object of the technique according to the present disclosure is to provide an angular ball bearing cage that solves the above-mentioned problems, is advantageous in ensuring a long distance between ball rows, and also reduces stirring resistance or friction that occurs between the balls and solidified grease.

### SOLUTION TO PROBLEM

An angular ball bearing cage according to one aspect of the present disclosure includes an annular small-diameter rim portion, a plurality of column portions, and a plurality of pockets.

The plurality of column portions extend toward one side in an axial direction from a plurality of locations in a circumferential direction of the small-diameter rim portion.

The plurality of pockets are for holding balls, each of the plurality of pockets provided in a portion surrounded by the small-diameter rim portion and column portions adjacent in the circumferential direction of the plurality of column portions.

Each of the plurality of column portions has a first branch portion and a second branch portion extending bifurcated in the circumferential direction at an end portion on the one side in the axial direction, and a grease storage groove formed in a portion between the first branch portion and the second branch portion.

A tip-end portion of the first branch portion of one column portion of the plurality of column portions and a tip-end portion of the second branch portion of a column portion adjacent to the one column portion of the plurality of column portions extend in directions approaching each other in the circumferential direction and are connected in the circumferential direction, and a tip-end portion of the second branch portion of the one column portion and a tip-end portion of the first branch portion of a column portion adjacent to the one column portion of the plurality of column portions extend in directions approaching each other in the circumferential direction, and are connected in the circumferential direction.

In the angular ball bearing cage according to an aspect of the present disclosure, the first branch portion and the second branch portion may each have a substantially V-shaped bent shape when viewed in a radial direction.

In this configuration, a side surface on the other side in the axial direction of the small-diameter rim portion and a side surface on the one side in the axial direction of each of a tip half portion of the first branch portion and a tip half portion of the second branch portion may be flat surfaces and arranged parallel to each other.

In addition, the grease storage groove may have a substantially V-shape when viewed in the radial direction.

Alternatively, in the angular ball bearing cage according to an aspect of the present disclosure, each of the first branch portion and the second branch portion may have an arch shape curved in an arc shape so that an outer side is convex with respect to a radial direction of the pocket.

Moreover, the grease storage groove may have a flat bottom surface parallel to a side surface on the other side in the axial direction of the small-diameter rim portion.

An angular ball bearing according to an aspect of the present disclosure includes an outer ring member having an angular outer-ring raceway on an inner peripheral surface thereof; an inner ring member having an angular inner-ring raceway on an outer peripheral surface thereof; a plurality of balls arranged between the outer-ring raceway and the inner-ring raceway; a cage for rotatably holding the plurality of balls; grease sealed in an internal space between the outer ring member and the inner ring member; and a sealing device closes an opening portion of the internal space; wherein the cage is an angular ball bearing cage according to an aspect of the present disclosure.

The angular ball bearing according to an aspect of the present disclosure can be used as a hub unit bearing to rotatably support an automobile wheel relative to a suspension device.

### EFFECT OF INVENTION

According to an aspect of the present disclosure, an angular ball bearing cage can be achieved that is advantageous in ensuring a long distance between ball rows, and by using grease held in the grease storage grooves, is capable of reducing stirring resistance or friction that occurs due to solidified grease.

### BRIEF DESCRIPTION OF DRAWINGS

FIG. 1 is a schematic cross-sectional view of a hub unit bearing of a first example of an embodiment according to the present disclosure.
FIG. 2 is a perspective view illustrating an angular ball bearing cage of a right-side row that has been taken out from the hub unit bearing in FIG. 1.
FIG. 3 is a partially enlarged view of FIG. 2.
FIG. 4 is a schematic cross-sectional view taken along line A-A in FIG. 3.
FIG. 5 is a schematic diagram of the angular ball bearing cage and surroundings thereof as viewed from the outside in the radial direction, and is for explaining that grease leaks from a grease storage groove of the right-side row angular contact ball bearing retainer in the hub unit bearing of the first example.
FIG. 6 is a partially enlarged schematic diagram of a second example of an embodiment according to the present disclosure and illustrates an angular ball bearing cage taken out and viewed from the outside in the radial direction.

### DESCRIPTION OF EMBODIMENTS

### [First Example]

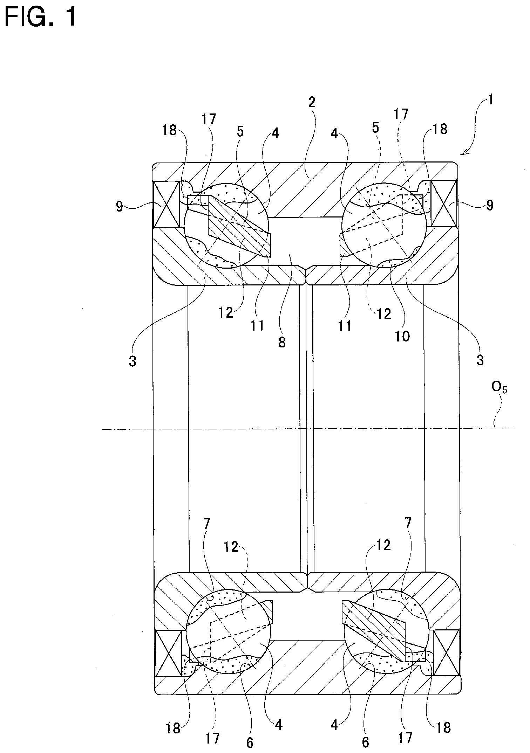

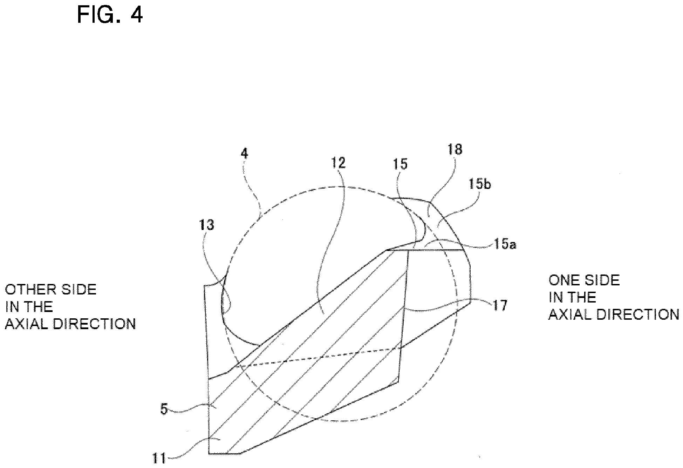

A first example of an embodiment according to the present disclosure will be described using FIGS. 1 to 5.

In the present example, an angular ball bearing equipped with an angular ball bearing cage is applied to a hub unit bearing (double row angular ball bearing) for rotatably supporting an automobile wheel relative to a suspension device.

### [Overall Configuration of Hub Unit Bearing]

The hub unit bearing 1 of the present example is a so-called first generation hub unit bearing, and includes an outer ring 2 corresponding to an outer ring member, a pair of inner rings 3 corresponding to an inner ring member, a plurality of balls 4, two angular ball bearing cages 5 and a pair of combination seal rings 9, each of which corresponds to a sealing device.

The outer ring 2 has double-row outer-ring raceways 6 on an inner peripheral surface thereof, each of the double-row outer-ring raceways 6 being angular in shape. The pair of inner rings 3 are arranged radially inside the outer ring 2 and coaxially with the outer ring 2, in a state in which small-diameter side end surfaces thereof abut against each other. The pair of inner rings 3 has double-row inner-ring raceways 7 on an outer peripheral surface thereof facing the double-row outer ring raceways 6 in the radial direction, each of the double-row inner-ring raceways 7 being angular in shape. A plurality of balls 4 are arranged in each row between the double-row outer ring raceways 6 and double-row inner ring raceways 7 so as to be spaced apart in the circumferential direction, and are rotatably held by angular ball bearing cages 5 in each row. The balls 4 arranged in double rows are given a back-to-back combination type (DB type) contact angle.

In a state of being assembled in a vehicle, the outer ring 2 is internally fitted and fixed to a knuckle of a suspension device (not shown). On the other hand, the pair of inner rings 3 is externally fitted and fixed to a hub axle (not shown) having a hub flange for supporting wheels. Therefore, in the hub unit bearing 1 of the present example, the outer ring 2 serves as a stationary ring that does not rotate even during use, and the pair of inner rings 3 serves as a rotating ring that rotates during use.

The opening portions on both sides in the axial direction of an internal space 8, existing between the inner peripheral surface of the outer ring 2 and the outer peripheral surface of the pair of inner rings 3, are respectively closed by the pair of combination seal rings 9, each of which is a sealing device. The pair of combination seal rings 9 prevent grease 10 sealed in the internal space 8 from leaking into an external space through the opening portions on both sides in the axial direction of the internal space 8, and prevent foreign matter such as muddy water present in the external space from entering the internal space 8 through the opening portions on both sides in the axial direction of the internal space 8.

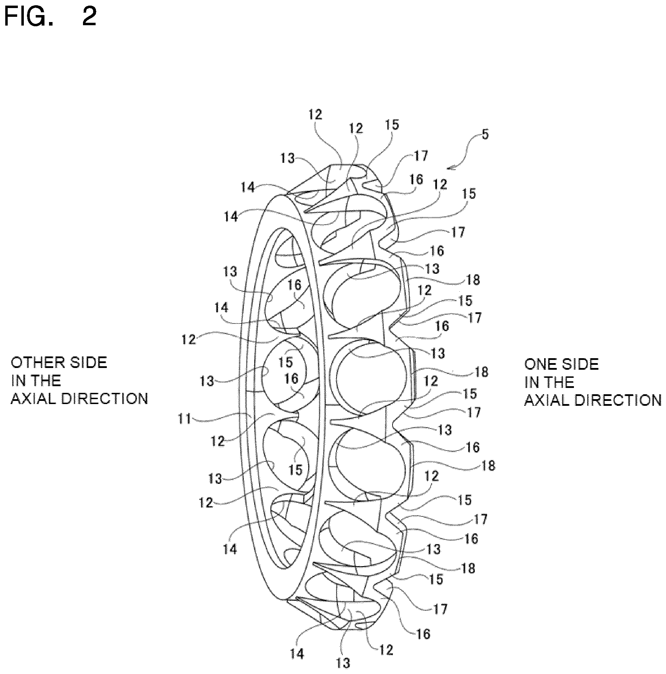

Next, the angular ball bearing cage 5 of the present example will be explained with reference to FIGS. 2 to 5.

Regarding the angular ball bearing cage 5, the axial direction, radial direction, and circumferential direction refer to each direction regarding the small-diameter rim portion 11 of the angular ball bearing 5, unless otherwise specified. In addition, the two angular ball bearing cages 5 incorporated into the hub unit bearing 1 are assembled in opposite directions in the axial direction, and thus the angular ball bearing cage 5 in the right row in FIG. 1 and the angular ball bearing cage 5 in the left row in FIG. 1 are oriented in opposite directions in the axial direction. More specifically, regarding the angular ball bearing cage 5 in the right row of FIG. 1, the right side is referred to as one side in the axial direction, and the left side is referred to as the other side in the axial direction; and regarding the angular ball bearing cage 5 in the left row of FIG. 1, the left side is referred to as one side in the axial direction, and the right side is referred to as the other side in the axial direction.

### [Overall Configuration of Angular Ball Bearing Cage]

The angular ball bearing cage 5 is integrally made of synthetic resin by injection molding (axial draw molding), and has a substantially truncated conical shape as a whole. The angular ball bearing cage 5 of the present example has both the features of a tilted-type angular ball bearing cage and a crown-type angular ball bearing cage. In other words, the angular ball bearing cage 5 of the present example has intermediate features between those of a tilted-type angular ball bearing cage and a crown-shaped angular ball bearing cage.

The synthetic resins that make up the angular ball bearing cage 5 may include various synthetic resins such as polyamide 66 (PA66), polyamide 6 (PA6), polyamide 46 (PA46), polyamide 9T (PA9T), polyphenylene sulfide (PPS), polyethylene terephthalate (PET), polyacetal (POM), and phenolic resin (PF). These synthetic resins, as necessary, may be mixed with various reinforcing fibers such as glass fibers, carbon fibers, and aramid fibers.

The angular ball bearing cage 5 includes a small-diameter rim portion 11, a plurality of column portions 12, and a plurality of pockets 13 for holding the balls 4.

The angular ball bearing cage 5 is manufactured by injection molding using axial draw using a pair of molds (a fixed mold and a movable mold) not shown. Therefore, a parting line 14 exists at the boundary between an outside portion in the radial direction and an inside portion in the radial direction of the inner surface of the pocket 13, which was located at the abutting portion of the pair of molds during injection molding.

### [Small-diameter Rim Portion]

The small-diameter rim portion 11 is configured in an annular shape as a whole and is continuous over the entire circumference. The outer circumferential surface of the small diameter rim portion 11 is a cylindrical surface or a tapered surface whose outer diameter increases toward the one side in the axial direction. In the illustrated example, an outer circumferential surface of the small-diameter rim portion 11 is a tapered surface with an inclination angle (taper half angle, draft angle) of 6°. An inner circumferential surface of the small-diameter rim portion 11 is a cylindrical surface having an inner diameter that does not change in the axial direction. A side surface on the other side in the axial direction of the small-diameter rim portion 11 is a flat surface arranged on a virtual plane orthogonal to a central axis Os of the angular ball bearing cage 5. A portion of a side surface on the one side in the axial direction of the small-diameter rim portion 11 that deviates in the circumferential direction from the column portion 12 is a concave curved surface having a radius of curvature slightly larger than the radius of curvature of the balls 4, and forms the inner surface of the pockets 13.

### [Column Portions]

The plurality of column portions 12 extend toward the one side in the axial direction from a plurality of locations in the circumferential direction of the side surface on the one side in the axial direction of the small-diameter rim portion 11. Each of the plurality of column portions 12 is inclined toward the outside in the radial direction as going toward the one side in the axial direction. The column portion 12 has a tapered surface portion on an outer circumferential surface thereof, an outer diameter of which increases toward the one side in the axial direction, and has a tapered surface portion on an inner circumferential surface thereof, an inner diameter of which increases toward the one side in the axial direction. Both side surfaces in the circumferential direction of the column portion 12 are concave curved surfaces respectively having a radius of curvature slightly larger than the radius of curvature of the ball 4, and respectively form the inner surface of the pockets 13.

The column portion 12 has a first branch portion 15 and a second branch portion 16 which are bifurcated and extend in the circumferential direction at an end portion on the one side (tip-end portion) in the axial direction, and a grease storage groove 17 is formed between the first branch portion 15 and the second branch portion 16. The angular ball bearing cage 5 of the present example includes a plurality of first branch portions 15, a plurality of second branch portions, and a plurality of grease storage grooves 17.

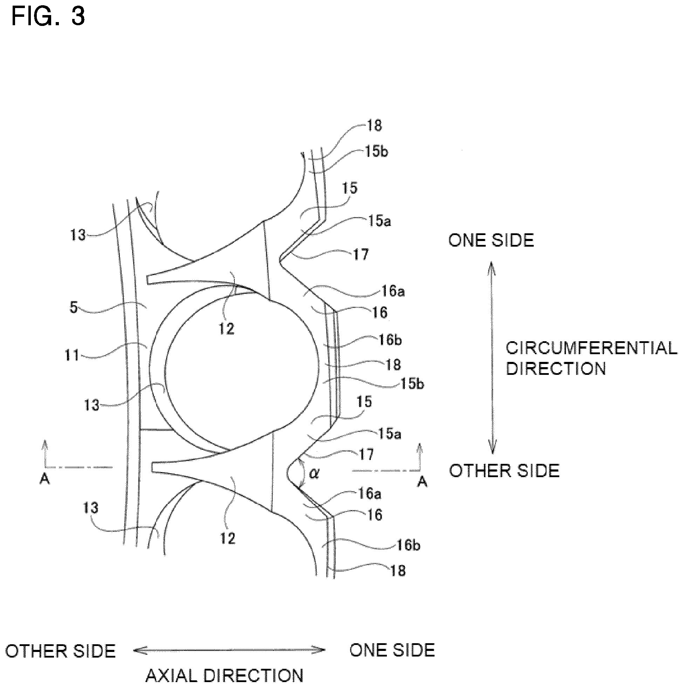

The first branch portion 15 is provided on a portion on one side in the circumferential direction of the end portion on the one side in the axial direction of the column portion 12, and extends in a direction toward the one side in the circumferential direction (see FIG. 3) as going toward the tip-end side, that is, as moving away from the small-diameter rim portion 11. On the other hand, the second branch portion 16 is provided on a portion on the other side in the circumferential direction of the end portion on the one side in the axial direction of the column portion 12, and extends toward the other side in the circumferential direction (see FIG. 3) as going toward the tip-end side, that is, as moving away from the small-diameter rim portion 11. In the angular ball bearing cage 5 of the present example, the first branch portion 15 and the second branch portion 16 have a symmetrical shape with respect to the circumferential direction. However, the first branch portion and the second branch portion can also be made asymmetrical in the circumferential direction.

In the angular ball bearing cage 5 of this example, the tip-end portion of the first branch 15 of one column portion 12 of the plurality of column portions 12 and the tip-end portion of the second branch portion 16 of a column portion 12 adjacent to the one side in the circumferential direction of the one column portion 12 extend toward each other in the circumferential direction and are connected in the circumferential direction. In addition, the tip-end portion of the second branch 16 of the one column portion 12 and the tip-end portion of the first branch portion 15 of a column portion 12 adjacent to the other side in the circumferential direction of the one column portion 12 extend in directions toward each other in the circumferential direction and are connected in the circumferential direction. In the angular ball bearing cage 5 of the present example, the connecting portions between the tip-end portions of the first branch portions 15 and the tip-end portions of the second branch portions 16 are arranged intermittently in the circumferential direction.

The first branch portion 15 and the second branch portion 16 each have a substantially V-shaped bent shape when viewed in the radial direction.

More specifically, the first branch portion 15 includes a base half portion 15a that extends diagonally in a direction toward the one side in the circumferential direction as going toward the one side in the axial direction, and a tip half portion 15b that extends from the tip-end portion of the base half portion 15a toward the one side in the circumferential direction.

A side surface on the one side in the circumferential direction of the base half portion 15a and a side surface on the other side in the axial direction of the tip half portion 15b are smoothly connected. The side surface on the one side in the circumferential direction of the base half portion 15a and the side surface on the other side in the axial direction of the tip half portion 15b are each a concave curved surface having a radius of curvature slightly larger than the radius of curvature of the balls 4, and form the inner surface of the pocket 13. On the other hand, the side surface on the other side in the circumferential direction of the base half portion 15a and the side surface on the one side in the axial direction of the tip half portion 15b are each a flat surface. Moreover, the side surface on the one side in the axial direction of the tip half portion 15b is arranged parallel to a side surface on the other side in the axial direction of the small-diameter rim portion 11, and is arranged on a virtual plane perpendicular to the central axis Os of the angular ball bearing cage 5.

The second branch portion 16 includes a base half portion 16a that extends diagonally in a direction toward the other side in the circumferential direction as going toward the one side in the axial direction, and a tip half portion 16b that extends toward the other side in the circumferential direction from the tip-end portion of the base half portion 16a.

A side surface on the other side in the circumferential direction of the base half portion 15a and a side surface on the other side in the axial direction of the tip half portion 16b are smoothly connected. The side surface on the other side in the circumferential direction of the base half portion 16a and the side surface on the other side in the axial direction of the tip half portion 16b are each a concave curved surface having a radius of curvature slightly larger than the radius of curvature of the ball 4, and constitute the inner surface of the pocket 13. On the other hand, the side surface on the one side in the circumferential direction of the base half portion 16a and the side surface on the one side in the axial direction of the tip half portion 16b are each a flat surface. In addition, the side surface on the one side in the axial direction of the tip half portion 16b is arranged parallel to the side surface on the other side in the axial direction of the small-diameter rim portion 11, and is on the same virtual plane as the side surface on the one side in the axial direction of the tip-end portion 15b.

More specifically, the connecting portion between the tip-end portion of the first branch portion 15 and the tip-end portion of the second branch portion 16 is configured by the tip half portion 15b of the first branch portion 15 of the column portion 12 and the tip half portion 16b of the second branch portion 16 of a column 12 adjacent to the column 12 on the one side in the circumferential direction being continuous in the circumferential direction. Each of the connecting portions constituted by the tip half portions 15b, 16b continuous in the circumferential direction are formed in a partially annular shape, and is curved in an arc shape around the central axis Os of the angular ball bearing cage 5. In the angular ball bearing cage 5 of the present example, the connecting portions constituted by the tip half portions 15b, 16b continuous in the circumferential direction are arranged alternately with the grease storage grooves 17 in the circumferential direction.

In the angular ball bearing cage 5 of the present example, the large-diameter rim portions 18 that are intermittently arranged are constituted by the connecting portions constituted by the tip half portions 15b, 16b that are continuous in the circumferential direction. Side surfaces on the one side in the axial direction of the large diameter rim portions 18 are flat surfaces, and are arranged parallel to the side surfaces on the other side in the axial direction of the small diameter rim portions 11.

The plurality of grease storage grooves 17 have a function of storing the grease 10 sealed in the internal space of the hub unit bearing 1. The grease storage groove 17 has a substantially V-shape when viewed in the radial direction. The grease storage groove 17 has a pair of flat inner surfaces that are configured by the side surface on the other side in the circumferential direction of the base half portion 15a of the first branch portion 15, and the side surface on the one side in the circumferential direction of the base half portion 16a of the second branch portion 16. An included angle α (see FIG. 3) between the pair of inner-side surfaces of the grease storage groove 17 can be set, for example, in the range of 30 degrees to 120 degrees, and preferably in the range of 70 degrees to 110 degrees. In the illustrated example, a size of the included angle between the pair of inner-side surfaces of the grease storage groove 17 is 90 degrees. In addition, a bottom portion of the grease storage groove 17 is located farther on the one side in the axial direction than the center of the pocket 13.

### [Pocket]

Each of the plurality of pockets 13 is formed (defined) in a portion surrounded by a side surface on the one side in the axial direction of the small-diameter rim portion 11, and column portions 12 adjacent in the circumferential direction (including side surface on the other side in the axial direction of the large-diameter rim portion 18).

Even in the hub unit bearing 1 provided with the angular ball bearing cage 5 of the present example, when the hub unit bearing 1 is used (when the inner ring 3 rotates), the grease 10 moves outward in the radial direction in the internal space 8 under the influence of centrifugal force and tends to collect in a space behind the combination seal ring 9. In the present example, the end portions on the one side in the axial direction of the column portions 12, or in other words, the large diameter rim portions 18 (connecting portions configured by tip half portions 15b, 16b continuous in the circumferential direction) arranged intermittently in the circumferential direction, or the large diameter rim portions 18 and grease storage grooves 17 stir the grease 10 gathered in the space behind the combination seal ring 9.

Therefore, compared to a case of using a tilted-type angular ball bearing cage that stirs with an annular large-diameter rim portion, the stirring resistance increases; however, the stirring resistance can be kept small compared to a case of using a crown-shaped angular ball bearing cage. In addition, in the angular ball bearing cage 5 of the present example, the large-diameter rim portions 18 are arranged intermittently, and thus, compared to a case of using a tilted-type angular ball bearing cage with an annular large-diameter rim, the thickness of the large-diameter rim portions 18 in the axial direction can be reduced, and the balls 4 can be arranged near the combination seal ring 9. Therefore, the angular ball bearing cage 5 of the present example is advantageous in ensuring a long distance between the ball rows.

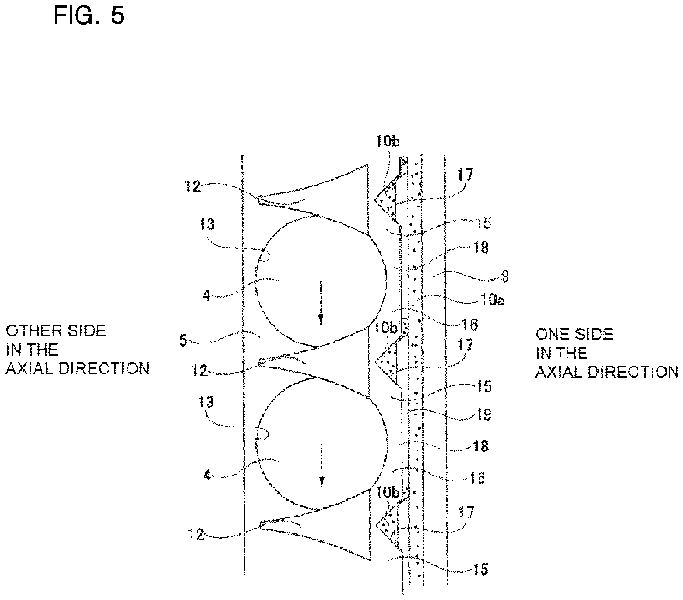

Even in the angular ball bearing cage 5 of the present example, similar to a case of using a tilted-type angular ball bearing cage, of the grease 10 accumulated in the space behind the combination seal ring 9, the grease 10 that is not sufficiently stirred tends to solidify. As a result, during continued use, as illustrated in FIG. 5, the solidified grease 10a is deposited behind (on the other side in the axial direction of) the combination seal ring 9. However, in the angular ball bearing cage 5 of the present example, it is possible to reduce friction generated between the angular ball bearing cage 5 and the solidified grease 10a.

In other words, in the angular ball bearing cage 5 of the present example, the angular ball bearing cage 5 can be rotated while the grease 10b is held inside the grease storage grooves 17. The grease 10b held in the grease storage grooves 17 tends to solidify because of no stirring; however, by the angular ball bearing cage 5 rotating, a part of the held grease 10b can leak toward the rear side in the rotational direction.

As a result, grease 10b can be supplied from the grease storage grooves 17 to an annular gap 19 between grease 10a solidified behind the combination seal ring 9 and grease 10b held (solidified) on the side surfaces on the one side in the axial direction of the large-diameter rim portions 18 and the grease storage grooves 17. Therefore, the flow path (characteristic length) is shortened, the Reynolds number of the annular gap 19 is lowered compared to a case where the grease 10b is not supplied, and a laminar flow can be created in the annular gap 19. In this way, in the hub unit bearing 1 of the present example, the friction generated between the angular ball bearing cage 5 and the solidified grease 10a can be reduced by using the grease 10b held in the grease storage grooves 17. As a result, it is possible to reduce the torque of the hub unit bearing 1.

### [Second Example]

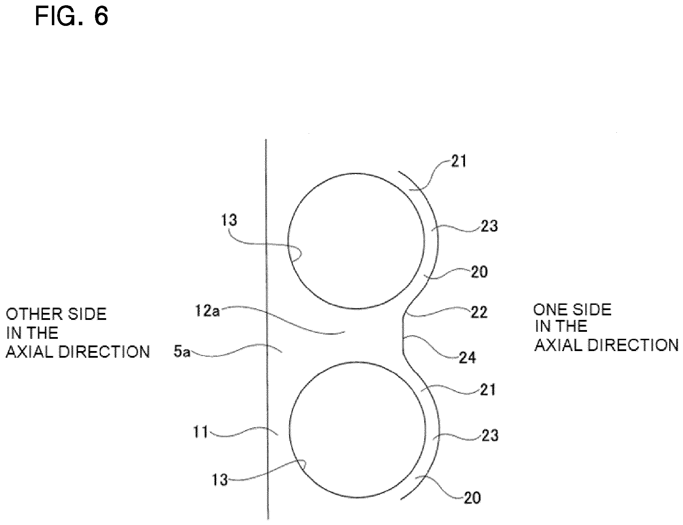

A second example of an embodiment according to the present disclosure will be described using FIG. 6.

In the present example, the shape of the end portion (tip-end portion) on the one side in the axial direction of the column portions 12a of the angular ball bearing cage 5a is changed from the structure of the first example.

In other words, the shape of the first branch portions 20 and the second branch portions 21 provided at the end portions on the one side in the axial direction of the column portions 12a, as well as the shape of the grease storage grooves 22, are changed.

In the present example, both the first branch portions 20 and the second branch portions 21 have an arch shape that is curved in an arc shape so that the outer side is convex in the radial direction of the pockets 13.

In the first branch portion 20, the tip-end side thereof extends in a direction toward the one side in the circumferential direction. In the second branch portion 21, the tip-end side thereof extends in a direction toward the other side in the circumferential direction. In the present example as well, the first branch portion 20 and the second branch portion 21 have a symmetrical shape with respect to the circumferential direction; however, the first branch portion and the second branch portion may have an asymmetric shape with respect to the circumferential direction.

The tip-end portion of the first branch portion 20 of one column portion 12 of the plurality of column portions 12a, and the tip-end portion of the second branch portion 21 of a column portion 12a adjacent to the one column portion 12a on the one side in the circumferential direction extend in directions toward each other in the circumferential direction and are connected in the circumferential direction. In addition, the tip-end portion of the second branch portion 21 of the one column portion 12a and the tip-end portion of the first branch portion 20 of the column portion 12a adjacent to the one column portion 12a on the other side in the circumferential direction extend in directions toward each other in the directions and are connected in the circumferential direction. A large-diameter rim portion 23 is configured by a connecting portion formed by the tip-end portion of the first branch portion 20 and the tip-end portion of the second branch portion 21 that are continuous in the circumferential direction.

Of the side surfaces of the first branch portion 20, the inner-side surface located on the inside in the radial direction of the pocket 13 is a concave curved surface having a radius of curvature slightly larger than the radius of curvature of the ball 4, and forms the inner surface of the pocket 13. On the other hand, of the side surfaces of the first branch portion 20, the outer-side surface located on the outside in the radial direction of the pocket 13 is a convex curved surface. In addition, the wall thickness (thickness dimension) of the first branch portion 20 in the radial direction of the pocket 13 gradually increases as approaching a base-end side of the first branch portion 20.

Of the side surfaces of the second branch portion 21, the inner-side surface located on the inside in the radial direction of the pocket 13 is a concave curved surface having a radius of curvature slightly larger than the radius of curvature of the ball 4, and forms the inner surface of the pocket 13. The inner-side surface of the second branch portion 21 is smoothly connected to the inner-side surface of the first branch portion 20. On the other hand, of the side surfaces of the second branch portion 21, the outer-side surface located on the outside in the radial direction of the pocket 13 is a convex curved surface. The outer-side surface of the second branch portion 21 is smoothly connected to the outer-side surface of the first branch portion 20. In addition, the wall thickness (thickness dimension) of the second branch portion 21 in the radial direction of the pocket 13 gradually increases as approaching a base-end side of the second branch portion 21.

The connecting portion (large-diameter rim portion 23) formed by the tip-end portion of the first branch portion 20 and the tip-end portion of the second branch portion 21 that are continuous in the circumferential direction is configured in a partially annular shape, and is curved in an arc shape around the central axis Os (see FIG. 1) of the angular ball bearing cage 5. Moreover, the large-diameter rim portions 23 are arranged alternately with the grease storage grooves 22 in the circumferential direction. The side surface on the one side in the axial direction of the large-diameter rim portion 23 is a convex curved surface that is curved so that the one side in the axial direction is convex.

The grease storage groove 22 has a substantially U-shape when viewed in the radial direction. The grease storage groove 22 has a pair of convex inner-side surfaces configured by the side surface on the other side in the circumferential direction of the first branch portion 20 and the side surface on the one side in the circumferential direction of the second branch portion 21, and a flat bottom surface 24 parallel to the side surface on the other side in the axial direction of the small-diameter rim portion 11. Further, in the grease storage groove 22, each of the pair of inner-side surfaces and the bottom surface 24 are smoothly connected by corner R portions.

In the present example as well, a part of the grease 10b (see FIG. 5) held in the grease storage grooves 22 can be caused to leak toward the rear side in the rotational direction by the rotation of the angular ball bearing cage 5a. Therefore, grease 10b can be supplied from the grease storage grooves 22 to an annular gap 19 between grease 10a solidified behind the combination seal ring 9 and grease 10b held (solidified) on the side surface on the one side in the axial direction of the large-diameter rim portions 18 and held in the grease storage grooves 22. As a result, a laminar flow can be created in the annular gap 19, and the friction generated between the angular ball bearing cage 5a and the solidified grease 10a can be reduced.

In particular, the grease storage groove 22 is provided with the flat bottom surface 24, and thus the amount of grease 10b that can be held in the grease storage groove 22 can be increased compared to the structure of the first example. Therefore, the amount of grease 10b flowing out from the grease storage groove 22 can be increased. Furthermore, a side surface on the one side in the axial direction of the large-diameter rim portion 23 is made into a convex curved surface having a shape close to a streamline shape. Therefore, the laminar flow formed between the grease 10a solidified behind the combination seal ring 9 and the side surface on the one side in the axial direction of the large-diameter rim portion 23 can be made thicker. As a result, the friction generated between the angular ball bearing cage 5a and the solidified grease 10a can be effectively reduced.

The structure of the present example is more effective in that, in a case of adopting a structure in which a distance in the circumferential direction between the pockets 13 (balls 4) adjacent to each other in the circumferential direction is long, the radius of curvature of the side surface on the one side in the axial direction of the large diameter-rim portion 23 can be increased.

The other configurations and effects of the present example are the same as those of the first example.

Although embodiments of the present disclosure have been described above as examples, the content of the present disclosure is not limited thereto, and may be modified and improved as appropriate. In addition, the structures of the first example and the second example may be implemented in combination as appropriate, as long as no contradiction occurs.

The angular ball bearing according to the present disclosure may be applied not only to first generation hub unit bearings but also to other generation hub unit bearings such as second generation hub unit bearings and third generation hub unit bearings. Moreover, the angular ball bearing according to the present disclosure may be applied not only to hub unit bearings but also to single-row or double-row angular ball bearings incorporated in various mechanical devices.

### REFERENCE SIGNS LIST

1 Hub unit bearing
2 Outer ring
3 Inner ring
4 Ball
5, 5a Angular ball bearing cage
6 Outer-ring raceway
7 Inner-ring raceway
8 Internal space
9 Combination seal ring
10, 10a, 10b Grease
11 Small-diameter rim portion
12, 12a Column portion
13 Pocket
14 Parting line
15 First branch portion
   15a Base half portion
   15b Tip half portion
16 Second branch portion
   16a Base half portion
   16b Tip half portion
17 Grease storage groove
18 Large-diameter rim portion
19 Annular gap
20 First branch portion
21 Second branch portion
22 Grease storage groove
23 Large-diameter rim portion
24 Bottom surface

## Claims

1. An angular ball bearing cage, comprising:
an annular small-diameter rim portion;
a plurality of column portions extending toward one side in an axial direction from a plurality of locations in a circumferential direction of the small-diameter rim portion; and
a plurality of pockets for holding balls, each of the plurality of pockets provided in a portion surrounded by the small-diameter rim portion and column portions adjacent in the circumferential direction of the plurality of column portions;
each of the plurality of column portions having a first branch portion and a second branch portion extending bifurcated in the circumferential direction at an end portion on the one side in the axial direction, and a grease storage groove formed in a portion between the first branch portion and the second branch portion; and
a tip-end portion of the first branch portion of one column portion of the plurality of column portions and a tip-end portion of the second branch portion of a column portion adjacent to the one column portion of the plurality of column portions extend in directions approaching each other in the circumferential direction and are connected in the circumferential direction, and a tip-end portion of the second branch portion of the one column portion and a tip-end portion of the first branch portion of a column portion adjacent to the one column portion of the plurality of column portions extend in directions approaching each other in the circumferential direction, and are connected in the circumferential direction.

2. The angular ball bearing cage according to claim 1, wherein
the first branch portion and the second branch portion each have a substantially V-shaped bent shape when viewed in a radial direction;
a side surface on the other side in the axial direction of the small-diameter rim portion and a side surface on the one side in the axial direction of each of a tip half portion of the first branch portion and a tip half portion of the second branch portion are flat surfaces and are arranged parallel to each other; and
the grease storage groove has a substantially V-shape when viewed in the radial direction.

3. The angular ball bearing cage according to claim 1, wherein
each of the first branch portion and the second branch portion has an arch shape curved in an arc shape so that an outer side is convex with respect to a radial direction of the pocket; and
the grease storage groove has a flat bottom surface parallel to a side surface on the other side in the axial direction of the small-diameter rim portion.

4. An angular ball bearing, comprising:
an outer ring member having an angular outer-ring raceway on an inner peripheral surface thereof;
an inner ring member having an angular inner-ring raceway on an outer peripheral surface thereof;
a plurality of balls arranged between the outer-ring raceway and the inner-ring raceway;
a cage for rotatably holding the plurality of balls;
grease sealed in an internal space between the outer ring member and the inner ring member; and
a sealing device closing an opening portion of the internal space; wherein
the cage is the angular ball bearing cage according to claim 1.

5. The angular ball bearing according to claim 4, wherein
the angular ball bearing is used as a hub unit bearing to rotatably support an automobile wheel relative to a suspension system.
